# EUROPEAN PATENT APPLICATION

(11) **EP 1 791 016 A2**
(43) Date of publication of application: **30.05.2007**
(21) Application number: 06255993.5
(22) Date of filing: 23.11.2006
(51) Int. Cl.: G02F 1/13, G02F 1/13357

(54) **A display diode with window assembly and the mobile phone having it**

(30) Priority: 23.11.2005 KR 20050112592
(71) Applicant: Samsung SDI Co., Ltd., Suwon-si, Gyeonggi-do (KR)
(72) Inventor: Jang, Jin Seok, c/o Legal & IP Team, Kilheung-eup Yongin-si Gyeonggi-do (KR); Jung, Jae Ho, c/o Legal & IP Team, Kilheung-eup Yongin-si Gyeonggi-do (KR); Kim, Yong Seok, c/o Legal & IP Team, Kilheung-eup Yongin-si Gyeonggi-do (KR); Song, Hyo Shin, c/o Legal & IP Team, Kilheung-eup Yongin-si Gyeonggi-do (KR); Lim, Hwan Soo, c/o Legal & IP Team, Kilheung-eup Yongin-si Gyeonggi-do (KR)
(74) Representative: Mounteney, Simon James

(57) **Abstract**

A display window assembly includes a display unit and a backlight unit on the a first side of the display unit. The backlight unit has a housing unit enclosing at least a portion of the display unit, exposing a second side of the display unit. The housing unit has at least one protrusion protruding toward the exposed, second side of the display unit. A window member closely adheres to the housing unit and the exposed second side of the display unit, and is coupled with the protrusion. An adhesion unit is arranged between the window member and the housing unit of the backlight to adhere the window member to the housing unit. A case unit has an opening exposing the window member, and has a stepped part on an opening edge of the opening. The stepped part is coupled with the window member.

## Description

### BACKGROUND

Liquid crystal displays (LCDs) have been used as the displays in various electronic apparatuses including portable communication apparatuses such as cellular phones or PDA. A window is installed on a case of an electronic apparatus for protecting an LCD by isolating it from the outside. An opening is also formed on the case for exposing the LCD to the outside. In this case, the window is coupled with the opening to form a window assembly for a display, and therefore the LCD is protected while images can be viewed from the outside.

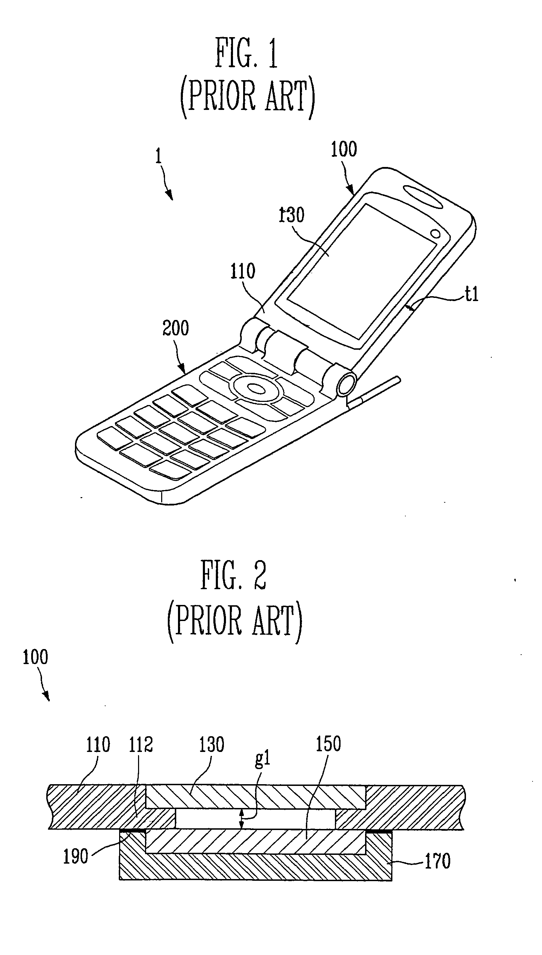

Hereinafter, a conventional display window assembly of a mobile phone will be described in detail, with reference to FIGs. 1 and 2.

FIG. 1 is an external perspective view showing a conventional mobile phone, and FIG. 2 is a schematic view showing a portion of the display shown in FIG. 1.

As shown in FIG. 1, a conventional mobile phone 1 essentially includes a display unit 100 displayed so that users can recognize certain signals; an input unit 200 for inputting display signals to the display unit 100, and a control unit (not shown in FIG. 1) for controlling the input signals of the input unit 200 and the display signals of the display unit 100.

Referring to FIG. 2, the display unit 100 of such a conventional mobile phone 1 includes a case 110; a window 130 installed in the case 110; a display unit 150 mounted between the window 130 and the case 110 to be installed inside of the mobile phone 1; and backlight unit 170 (so-called "BLU").

The case 110 represents the bulk of the appearance of the mobile phone 1, wherein a predetermined opening is formed for showing images from the display unit 150 installed inside of the case 110 to the outside, and a stepped part 112 is formed along edges of the opening.

The window 130 is installed in the stepped part 112 of the case 110, and is designed to protect the display unit 150, installed inside of the case 110, from the outer environment.

The display unit 150 emits display signals by driving of the mobile phone 1 so that users can recognize the signals, and is arranged inside the case 110 to correspond to the window 130 of the mobile phone 1.

The display unit 150 is received into a backlight unit 170 for projecting the light to the display unit 150, and the backlight unit 170 is adhered to an inner surface of the case 110 by, for example, a tape 190, to fix the display unit 150.

A gap g1 may be generated between the window 130 and the display unit 150, in the stepped part 112 of the case 110. The gap g1 is an important factor in determining a thickness t1 of the display unit 100 in the mobile phone 1.

There has been a demand that the gap g1 of the display unit 100 should be reduced to meet an increasing demand for thin mobile phone 1.

However, a mobile phone with a reduced gap structure has a poor impact resistance against externally applied impacts and allows the backlight unit 170 to be in direct contact with the inside of the case 110. The display device may not be sufficiently secured to the case and - processes for assembling the display unit may become more complicated resulting in a lowered production yield.

### SUMMARY OF THE INVENTION

Accordingly, a first aspect of the invention provides a window assembly as set out in Claim 1. Preferred features are set out in Claims 2 to 18.

A second aspect of the invention provides a portable electronic device as set out in Claim 19. A preferred feature is set out in Claim 20.

### BRIEF DESCRIPTION OF THE DRAWINGS

These and/or other aspects and features of the invention will become apparent and more readily appreciated from the following description of embodiments of the invention, taken in conjunction with the accompanying drawings of which:

FIG. 1 is an external perspective view showing a conventional mobile phone;

FIG. 2 is a schematic cross-sectional view showing a portion of the display window assembly shown in FIG. 1;

FIGs. 3A to 3D are partial schematic cross-sectional views showing various embodiments of a display window assembly according to an embodiment of the present invention;

FIGs. 4A to 4H are partial plane views schematically showing various embodiments of an adhesion unit provided on a display unit and a backlight unit in a display window assembly according to an embodiment of the present invention;

FIGs. 5A and 5B are perspective views schematically showing various combined embodiments of a backlight unit and a protrusion in a display window assembly according to an embodiment of the present invention;

FIGs. 6A and 6B are partial perspective views schematically showing couplings between the backlight unit and the protrusion in FIG. 5A and FIG. 5B, respectively;

FIGs. 7A to 7F are partial plane views schematically showing various embodiments of a backlight unit and a protrusion in a display window assembly according to an embodiment of the present invention;

FIGs. 8A and 8B are perspective views schematically showing various combined embodiments of a backlight unit, in which a protrusion is arranged, and a window member in a display window assembly according to an embodiment of the present invention; and

FIG. 9 is an external perspective view showing an embodiment of a mobile phone having a display window assembly according to an embodiment of the present invention.

### DETAILED DESCRIPTION

Hereinafter, a display window assembly according to embodiments of the present invention will be described with reference to the accompanying drawings.

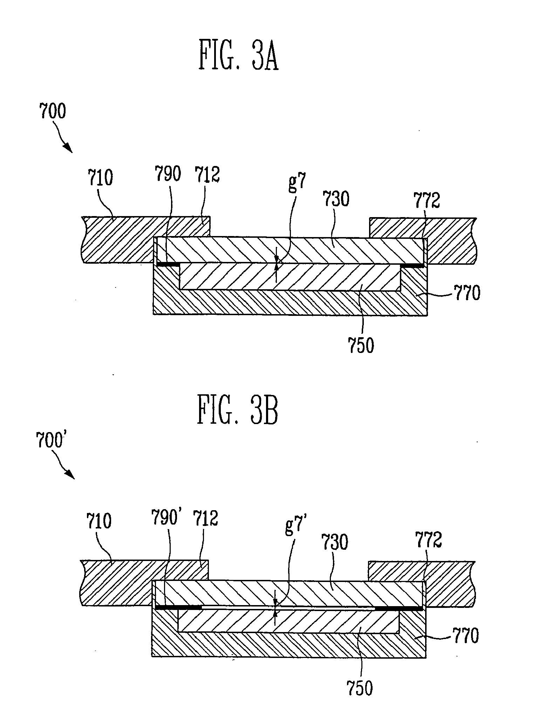

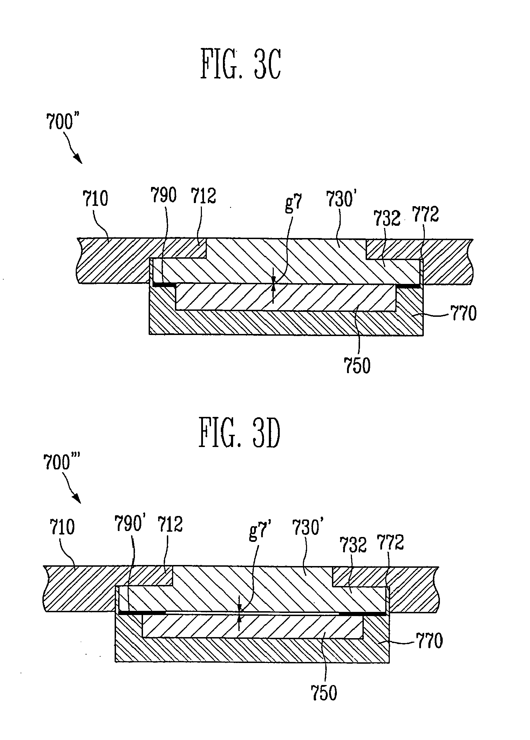

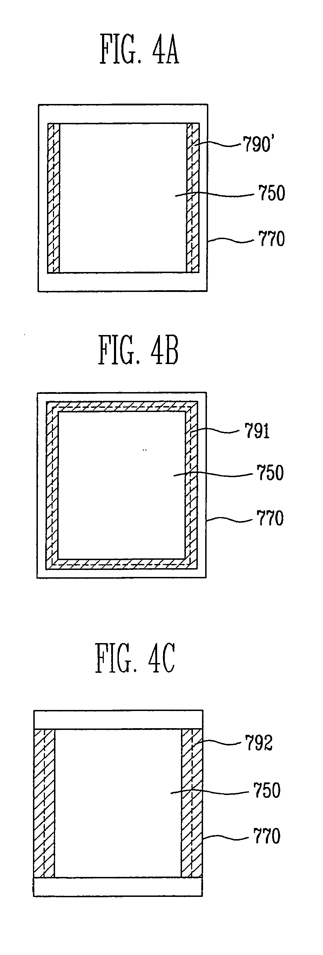

FIGs. 3A to 3D are partial schematic cross-sectional views showing various embodiments of a display window assembly according to an embodiment of the present invention, and FIGs. 4A to 4H are partial plan views schematically showing various embodiments of an adhesion unit provided on a display unit and a backlight unit in a display window assembly according to the present invention.

A display window assembly 700, 700', 700", 700"' according to the embodiments of the present invention shown in FIGs. 3A-3D include a display unit 750 for optically displaying predetermined signals; and a backlight unit 770 (BLU) provided on a first side of the display unit 750 to project the light to the display unit 750. The backlight unit 770 also has a housing unit for enclosing a portion of a second side of the display unit 750. The second side of the display unit 750 is exposed to a window member 730. The housing unit has at least one protrusion 772 protruding in a direction away from the first side of the display unit 750. The window member 730 is closely adhered to a portion of the housing unit of the backlight unit 770 and is coupled with at least one predetermined protrusion 772 of the housing unit. The window member 730 is also closely adhered to the exposed second side of the display unit 750. Referring to FIGs. 3A-3B, an adhesion unit 790, 790' is arranged between the window member 730 and the housing unit of the backlight unit 770 to adhere them to each other. A predetermined opening in the case 710 is formed so that the window member 730 can be inserted, and a stepped part 712 formed in one side of the opening edge allows coupling of the window member 730 with the stepped part 712.

As shown in FIGs. 3A to 3B, a predetermined opening is formed in a case 710, and the opening is formed to display pictures to users. In the case 710 in which the opening is formed, a predetermined stepped part 712 is formed along edges of the opening formed thereof, and the stepped part 712, in these embodiments, are formed entirely along the opening edge. However, embodiments of the invention are not limited thereto and the stepped part may be formed along a portion of the opening edge. The stepped part 712 in these embodiments is formed on one side of the case 710, and a window 730 is then coupled with the stepped part 712. Although not shown in the figures, different shapes other than the stepped part 712 shown may be realized according to desired characteristics, namely if windows are installed on both sides of the case 710, or if grooves are formed in an inner surface of the opening edge formed in the case 710 to fix the window 730 to the grooves. The window 730 may also be closely coupled with the grooves, and the stepped part 712 may be entirely or partially formed on the edge of the opening formed in the case 710. The arrangement of these elements thus depends on the desired characteristics.

The window 730 is made of materials capable of transmitting light at least over the visible light wavelength, and display signals emitted from the display unit 750 are transmitted through the window 730 so that users can recognize the display signals.

The display unit 750 is installed inside of the case 710, and is formed to correspond to the opening and window 730 of the case 710 so that it can emit display signals for users to recognize. The display unit 750 may be a liquid crystal display (LCD) composed of liquid crystals or any other suitable display device, such as are used for other applications.

The first side of the display unit 750 is provided close to one side of the window 730. The display unit 750, more specifically a circumference of the display unit 750, is smaller than or the same size as a circumference of the window 730 which closely adheres to the display unit 750. In the display unit 750 and the window 730, which are closely adhered to each other, circumferences of each of the closely adhered surfaces precisely correspond to each other upon closely adhering to each other if they have the same circumferences. Center points of the display unit 750 and the window 730, in this embodiment, are in agreement with each other for each circumference upon closely adhering to each other if a circumference of the display unit 750 is smaller than that of the window 730.

In order to display the display signals from the display unit 750, a backlight unit 770 is provided at a surface of the display unit 750, more specifically at a surface to which the display unit 750 is closely adhered, and therefore the light at least over the visible light wavelength may be projected into the display unit 750. The surface of the display unit 750 adhering to the backlight unit 770 is on an opposite side as the surface of the display unit 750 adhering to the window 730.

The backlight unit 770 has a housing unit, and, in this embodiment, the display unit 750 is shaped as a rectangular hexahedron with outer surfaces. One outer surface is closely adhered to the window 730 and another outer surface is adjacent to the backlight unit 770.

The housing unit of the backlight unit 770 is closely adhered to at least one of the surfaces of the window 730, which is not closely adhering to the display unit 750. The side of the window 730 that adheres to the backlight unit 770 also closely adheres to the display unit 750 if a circumference of the adhering surface of the display unit 750 is smaller than a circumference of the window.

A circumference of the window 730, in this embodiment, is greater than a circumference of the adhering surface of the display unit 750. The circumferential surfaces of the window 730 that are peripheral to the adhering surface of the display unit 750 are closely adhered to the housing unit of the backlight unit 770. That is, in this embodiment, the surface area of the window 730 is identical to the sum of the surface area of the display unit 750 and the surface area of the adhering surface between the window 730 and the housing unit of the backlight unit 770.

The housing unit provided in the backlight unit 770 may be variously modified according to its desired rigidity and functions, and therefore it is shown in the accompanying drawings of this specification without distinction of the backlight unit 770.

When the display unit 750 and the window 730 enclosed by the housing unit of the backlight unit 770 are closely adhered to each other, an adhesion unit is provided between the window 730 and the housing unit of the backlight unit 770 so that the window 730 and the housing unit of the backlight unit 770 can be closely adhered to each other. In this embodiment, the adhesion unit is a tape 790, but it may be any other element suitable for adhesion.

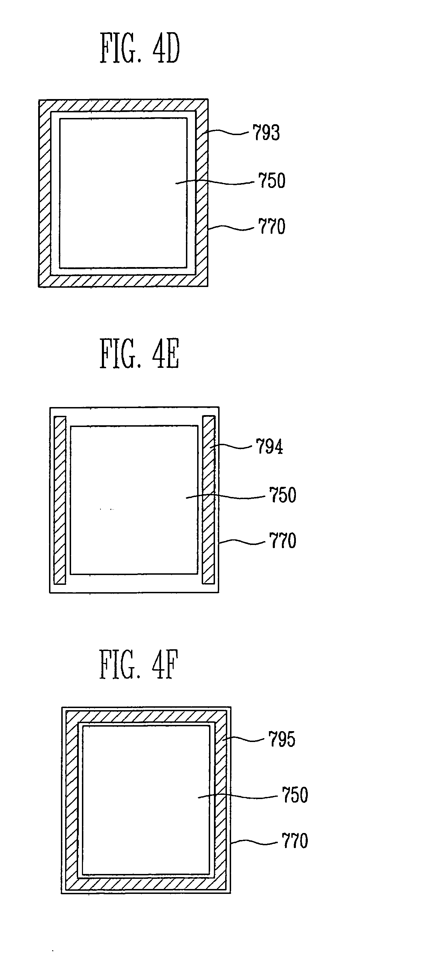

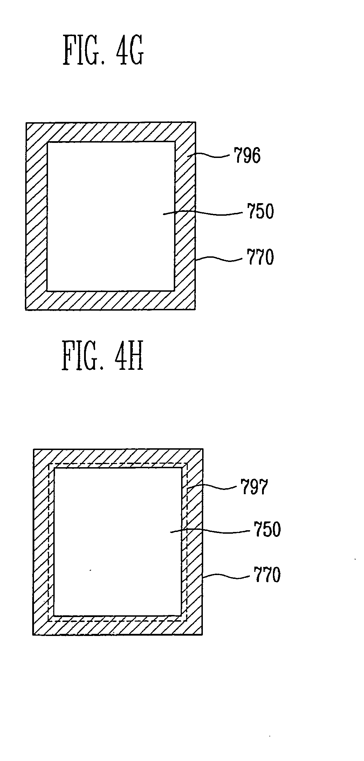

The tape 790 provided between the window 730 and the housing unit of the backlight unit 770 may be formed in a surface where the housing unit of the backlight unit 770 is closely adhered to the window 730 (FIGs. 4A to 4H) so that the tape's 790 outer dimension can be smaller than (FIG. 4A, 4B, 4E, 4F) or identical to (FIG. 4C, 4D, 4G, 4H) that of the housing unit of the backlight unit 770. The display unit 750 forms a predetermined open or closed opening so that display signals displayed by the display unit 750 can be recognized by the users by means of the window 730 and the opening of the case 710, as shown in FIGs. 4A to 4H.

In this case, a gap g7 is formed between the window 730 and the display unit 750, and the gap g7 may have a smaller value than a gap g1 in a conventional display 100 shown in FIG. 2.

As shown in FIGs. 3B and 4A-4H, the tape 790', 791-797 provided between the window 730 and the housing unit of the backlight unit 770 may be formed over the surface where the housing unit of the backlight unit 770 is closely adhered to the window 730, as well as the surface where the display unit 750 is closely adhered to the window 730 (FIGs. 4A, 4B, 4C, 4H) and its outer dimension can be smaller than (FIG. 4A, FIG. 4B), or identical to (FIG. 4C, FIG. 4H) that of the housing unit of the backlight unit 770. The display unit 750 forms a predetermined open or closed opening so that display signals displayed by the display unit 750 can be recognized by the users by means of the window 730 and the opening of the case 710.

In this case, a gap g7' is formed between the window 730 and the display unit 750, and the gap g7' may have a smaller value than a gap g1 in a conventional display 100 shown in FIG. 2. The gap g7' may have a higher value than the above gap g7 according to thickness of the tape 790, 790' inserted between the display unit 750 and the window 730. This larger gap may have advantages considering the rigidity of the display.

Generally, for the window 730, the display unit 750 and the housing unit of the backlight unit 770, each having a rectangular shape, the tape 792, 793, 796, 797 is formed so that it can correspond to the most outer side (FIG. 4C, FIG. 4D, FIG. 4G and FIG. 4H) on the surfaces where the housing unit of the backlight unit 770 is closely adhered to the window 730, or the housing unit of the backlight unit 770 and the display unit 750 are closely adhered to the window 730. Namely, a circumference of the tape is formed so that its outer dimension can be identical to that of the housing unit of the backlight unit 770 and/or the window 730. The circumference of the tape 790', 792, 794 may also be formed to correspond to opposite sides of the display unit 750 having a rectangular shape, as shown in FIG. 4A, 4C, and 4E. The tape 793, 796, 797 can also be formed to have a predetermined closed interval along the outer circumference of the housing unit of the backlight unit 770 having a rectangular shape, as shown in FIG. 4D, FIG. 4G and FIG. 4H. The tape 791, 795 may also be arranged to have a smaller, closed outer dimension than that of the housing unit of the backlight unit 770, as shown in FIG. 4B and FIG. 4F.

As shown in FIGs. 3C and 3D, the window 730' has a stepped part 732 so as to correspond to the stepped part 712 formed in the case 710, and therefore it may be designed to fill the opening of the case 710.

The case 710 may have an inward stepped part 712, and have an outward stepped part (not shown). The window 730' provided in the stepped part 712 according to each modified embodiment also has a stepped part 732 so that it can fill the opening of the case 710 with a shape corresponding to the window 730', and the stepped part 712 of the case 710 may be a more complicated stepped part 712 in addition to the stepped part 712 as shown in the figure. At this time, the stepped part 732 of the window 730' may be also complicated to correspond to the window 730'.

The tape 790, 790' may be further provided between the display unit 750 and the window 730', as shown in FIG. 3C and FIG. 3D. In this case, the tape 790, 790' may be integrally or separately formed so that the tape 790' provided between the backlight unit 770 and the window 730' can be further extended between the display unit 750 and the window 730'.

In the modified embodiments of each display 700, 700', 700", 700"' as described above, the display has gaps g7, g7' between the window 730, 730' and the display unit 750, and the gaps g7, g7' have a smaller value than the gap g1 in the conventional display 100 as shown in FIG. 2, and therefore it is possible to make the display thinner, and the display may be easily assembled by closely adhering the window 730, 730' and the housing unit of the backlight unit 770 to each other, or adhering the housing unit of the backlight unit 770 and the display unit 750 to each other using a tape 790', 790-797. Accordingly, the display may be more easily assembled when compared to the conventional display 100 since an adhesion space is easily secured, and therefore its entire cost may be reduced.

Referring to FIG. 3A to FIG. 3D, a predetermined protrusion 772 is provided on the housing unit of the backlight unit 770, and the protrusion 772 is formed in a direction of the exposed side of the display unit 750, namely toward a surface of the window 730, 730' which is closely adhered to the display unit 750, and then plays a role to guide the window 730, 730' when the window 730, 730' is closely adhered to the backlight unit 770.

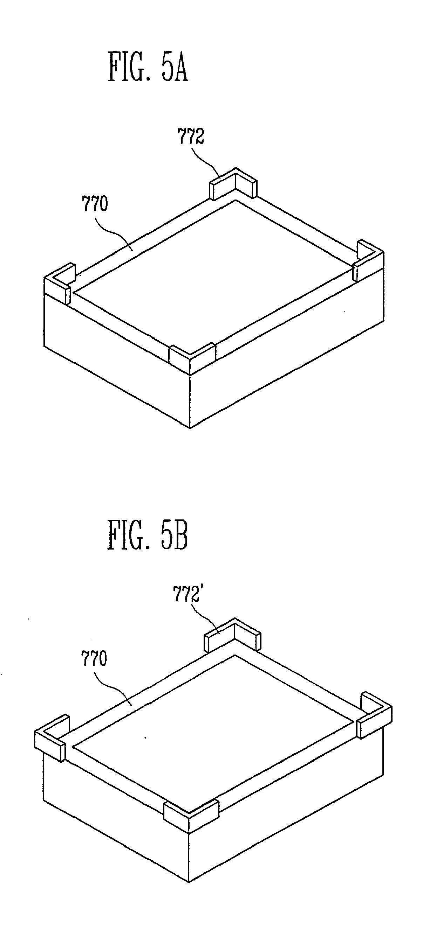

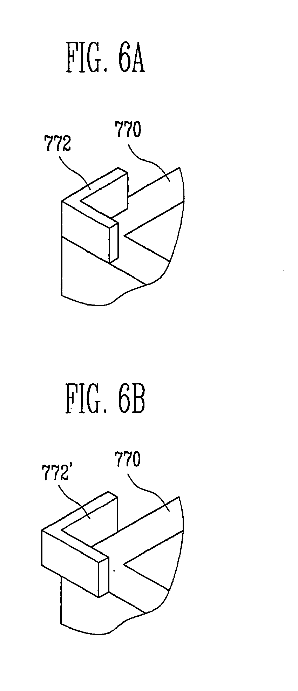

FIGs. 5A and 5B are perspective views schematically showing various combined embodiments of a backlight unit and a protrusion in a display window assembly according to the present invention, and FIGs. 6A and 6B are partial perspective views schematically showing coupling between the backlight unit and the protrusions in FIG. 5A and FIG. 5B, respectively.

A predetermined protrusion 772 provided in the housing unit of the backlight unit 770 may be formed on the surface of the backlight unit 770 that is to be closely adhered to the window (not shown), as shown in FIG. 5A and FIG. 6A. Another embodiment of a protrusion 772' is formed on the most outer circumference of the surface of the backlight unit 770 that is to be closely adhered to the window (not shown), as shown in FIG. 5B and FIG. 6B.

These protrusions 772, 772' may be integrally formed with the housing unit of the backlight unit 770, or separately formed (not shown) so that it can be coupled with the housing unit of the backlight unit 770 using known connection methods, and the combination thereof may be also used.

The display may be integrally formed considering rigidity and a production yield of its structure, but it may be also be separately formed considering the difficulty of manufacturing the housing unit, or easy changeability upon generation of poor protrusions 772, 772'.

The protrusions 772, 772' may be formed on its four corner angles for the housing unit of the backlight unit 770 having a rectangular shape so that it has corner angles along two sides adjacent to the corner angles because it plays a role to guide the window 730 when the protrusion 772, 772' is closely adhered to the window.

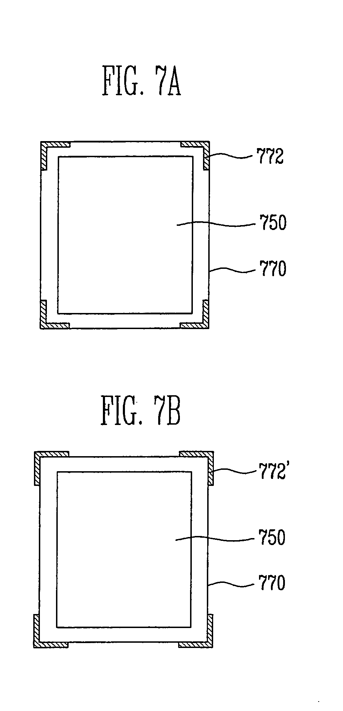

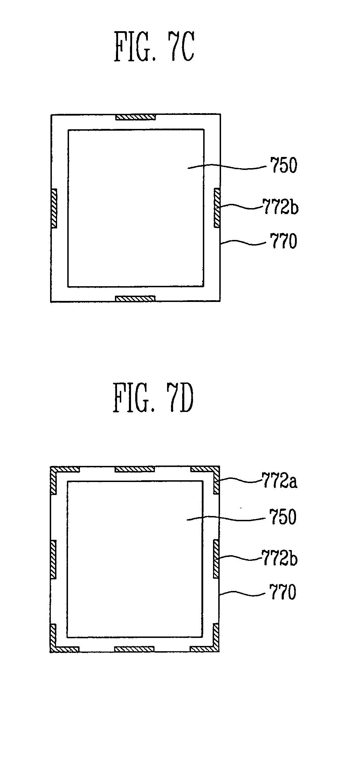

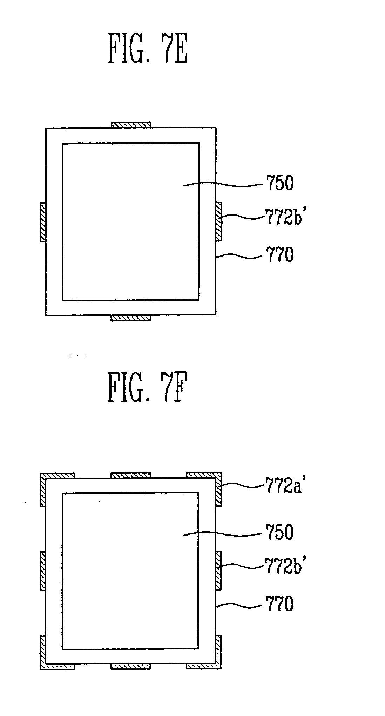

FIGs. 7A to 7F are partial plane views schematically showing various combined embodiments of a backlight unit and a protrusion in a display window assembly according to the present invention.

The protrusion 772, 772a, 772b provided in the housing unit of the backlight unit 770 may be formed on a surface to be closely adhered to the window (FIG. 7A, FIG. 7C and FIG. 7D), or the protrusion 772', 772a', 772b' may be formed on the most outer circumference of the surface to be closely adhered to the window (FIG. 7B, FIG. 7E and FIG. 7F), and the combination thereof may be also used, as described above.

The protrusion 772b, 772b' may be formed on a side between one corner angle and another corner angle adjacent the one corner angle for the housing unit of the backlight unit 770 having a rectangular shape (FIG. 7C and FIG. 7E), and the protrusion 772a, 772a' may be formed on at least one corner angles (FIG. 7A and FIG. 7B), and the combination thereof may be also used (FIG. 7D and FIG. 7F).

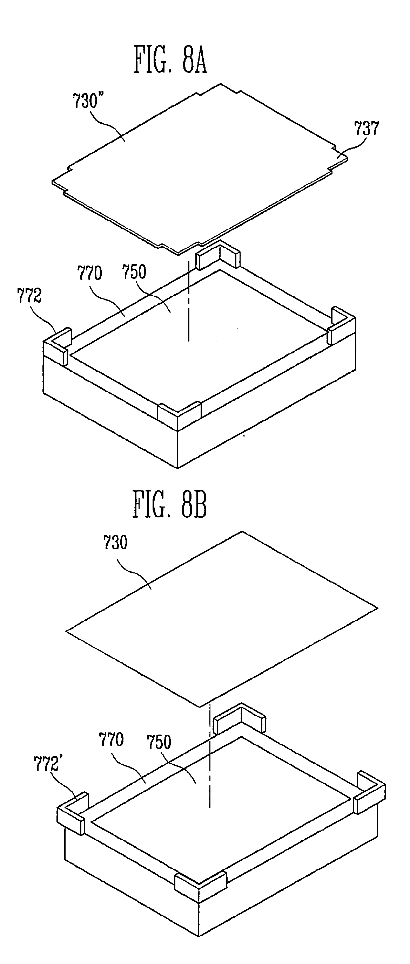

FIGs. 8A and 8B are perspective views schematically showing various combined embodiments of a backlight unit, in which a protrusion is arranged, and a window member in a display window assembly according to the present invention.

The protrusion 772, 772', provided in the housing unit of the backlight unit 770 having the arrangement described above, plays a role to guide the window 730, 730", and then facilitates its assembling when the window 730, 730" is closely adhered to the backlight unit 770 and the display unit 750 received into the backlight unit 770, as shown in FIG. 8A and FIG. 8B.

The adhesion unit is not shown in FIG. 8A and FIG. 8B, but is the same as described above. However, the adhesion unit 790 may be formed so that its arrangement can be escaped in different directions when the protrusion 772, 772' is formed on a surface of the backlight unit 770 closely adhered to the window 730.

A notch 737 is formed on the window 730" so that it can be coupled with the window 730" when the protrusion 772 is formed on the surface of the backlight unit 770 closely adhered to the window 730", as shown in FIG. 8A. In addition to such an arrangement, the window may form a notch or indentation for coupling with the protrusion in which the protrusion 772a, 772b is formed on a surface of the backlight unit closely adhered to the window, namely in the arrangement as shown in FIG. 7C and FIG. 7D, and may also form a notch on the window, coupled with the protrusion provided on a surface of the backlight unit closely adhered to the window 730 having other arrangements not shown herein.

If the protrusion 772' is further formed on the most outer circumference of a surface of the backlight unit 770 closely adhered to the window 730, the window 730 may be closely adhered to the backlight unit 770 and the display unit 750 received into the backlight unit 770 even though the notch 737 as shown above in FIG. 8A is not completely formed, as shown in FIG. 8B. Accordingly, this arrangement is identical to other arrangements of the protrusion 772' further formed on the most outer circumference of the surface of the backlight unit 770 closely adhered to the window 730.

Hereinafter, a mobile phone having the display window assembly according to an example of an embodiment of the present invention will be described in detail with reference to the accompanying drawing.

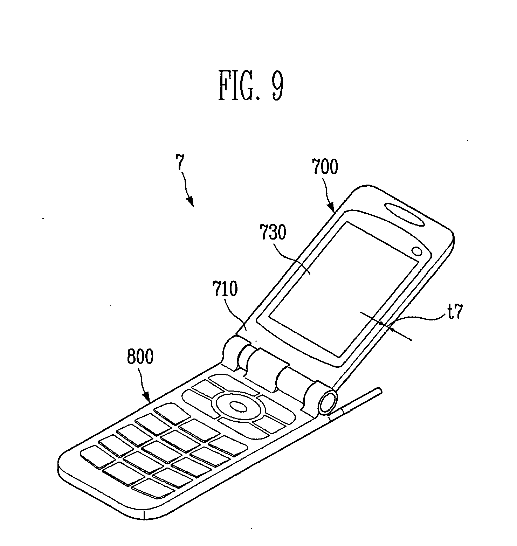

FIG. 9 is an external perspective view showing an embodiment of a mobile phone having the display window assembly according to the present invention.

The mobile phone 7 having the display window assembly according to an embodiment of the present invention includes the display window assembly 700 according to an embodiment of the present invention; an input unit 800 formed to input display signals into the display 700; and a control unit (not shown) for controlling the input signals of the input unit 800 and the display signals of the display.

Referring to FIG. 9, the display 700 is formed as a display 700 having gaps g7 or g7' between the window 730 and the display unit 750, and an input unit 800 is formed to input display signals into the display 700. The input unit 800 is a conventional input unit 800, and includes a keypad for manual works of users, a sound-recognition unit for sound, a receiving unit for communication signals, an incident light-recognition unit for a camera attached to a phone 7, and other elements for generating input signals in general.

Also, a conventional control unit is formed in the phone 7 so that it can control the input signals of the input unit 800 and the display signals of the display 700.

The phone 7 arranged thus may have a shape as shown in FIG. 9, and have other shapes having the display 700, the input unit 800 and the control unit. The thickness t7 of the phone 7, more specifically the thickness t7 formed as the display 700 in the phone 7 may be thinner than the thickness t1 in the conventional phone 1 as shown in FIG. 1 due to the gaps g7 or g7' between the window 730 and the display unit in the display 700.

Although a few embodiments of the present invention have been shown and described in detail, it would be appreciated by those skilled in the art that the description proposed herein are examples of embodiments for the purpose of illustrations only, not intended to limit the scope of the invention. And, it should be also understood that other equivalents and modifications could be made thereto without departing from the scope of the invention.

As described above, according to various embodiments of the present invention, the display window assembly and the mobile phone having the same may reduce the manufacturing cost since the final products becomes thinner, and are also easily assembled.

The display window assembly and the mobile phone having the same may improve an impact resistance against impacts applied from the outside, and may smoothly carry out its manufacturing process to increase its yield by securing an adhesion space.

Further, the display window assembly and the mobile phone having the same may smoothly carry out its process by improving a guiding efficiency upon manufacturing a window assembly, and therefore further increase its production yield.

## Claims

1. A display window assembly comprising:
a display unit for optically displaying predetermined signals;
a backlight unit provided on a first surface of the display unit to project light to the display unit and having a housing unit for enclosing at least a portion of the display unit so that a second surface of the display unit is at least partially exposed, wherein the housing unit has at least one protrusion arranged to protrude toward the second surface of the display unit;
a window member adhered to at least a portion of the housing unit of the backlight unit and the second surface of the display unit, and coupled with the at least one protrusion of the housing unit;
an adhesion unit arranged between the window member and the housing unit of the backlight arranged to adhere the window member and the housing unit of the backlight unit to each other; and
a case unit formed with an opening so that the window member can be at least partially exposed through the opening, and having a stepped part on a side of an edge of the opening and coupled with the window member.

2. A display window assembly according to claim 1, wherein a circumference of the window member corresponds to a circumference of the backlight unit that adheres to the window member.

3. A display window assembly according to claim 1 or 2, wherein the adhesion unit is arranged on at least one surface of the backlight unit facing towards the window member.

4. A display window assembly according to claim 3, wherein the adhesion unit is further arranged between the window member and the display unit to adhere the window member and the display unit to each other.

5. A display window assembly according to claim 3, wherein the adhesion unit is arranged to adhere the display unit to the window member, and the backlight unit to the window member so that an inner portion can be formed between the display unit and the window member, wherein the inner portion is smaller than or identical in size to outer dimensions of the backlight unit or the window member.

6. A display window assembly according to claim 5, wherein facing surfaces of the window member, the display unit, and the backlight unit have a rectangular shape, and the adhesion unit is formed along an outermost surface region of the backlight unit and the window member so that a circumference of the adhesion unit can be identical to outer dimensions of the backlight unit or the window member, and arranged to correspond to the facing surfaces of the display unit or the window member.

7. A display window assembly according to claim 5, wherein the adhesion unit is formed along an outermost surface region of the backlight unit and the window member so that a circumference of the adhesion unit can be identical to outer dimensions of the display unit or the window member, and has an inner portion to which at least a portion of the display unit is exposed.

8. A display window assembly according to claim 5, wherein facing surfaces of the window member, the display unit, and the backlight unit have a rectangular shape, and the adhesion unit is formed along an outermost surface region of the backlight unit and the window member so that a circumference of the adhesion unit can be smaller than outer dimensions of the backlight unit or the window member, and the adhesion unit is arranged to correspond to the facing sides of the display unit or the window member.

9. A display window assembly according to claim 5, wherein the adhesion unit is formed along an outermost surface region of the backlight unit and the window member so that a circumference of the adhesion unit can be smaller than outer dimensions of the backlight unit or the window member, and has an inner portion to which at least a portion of the display unit is exposed.

10. A display window assembly according to any preceding claim, wherein the stepped part is formed to correspond to the opening of the case unit in which the stepped part is formed.

11. A display window assembly according to any preceding claim, wherein the at least one protrusion of the housing unit provided in the backlight unit is integrally formed with the housing unit.

12. A display window assembly according to any one of claims 1 to 11, wherein the at least one protrusion of the housing unit provided in the backlight unit is separately formed with the housing unit.

13. A display window assembly according to any preceding claim, wherein the at least one protrusion of the housing unit provided in the backlight unit is formed on a surface of the housing unit adhered to the window member.

14. A display window assembly according to claim 13, wherein the window member has a notch formed so that it can be coupled with a one of the at least one protrusion of the housing unit.

15. A display window assembly according to any preceding claim, wherein the at least one protrusion of the housing unit provided in the backlight unit is further formed on an outermost circumference of the surface of the housing unit closely adhered to the window member.

16. A display window assembly according to any preceding claim, wherein the housing unit provided in the backlight unit has a rectangular shape surface, and the at least one protrusion is provided in at least one corner angle of the housing unit.

17. A display window assembly according to any preceding claim, wherein the display unit comprises a liquid crystal display.

18. A display window assembly according to any preceding claim, wherein the window member is formed so that it can transmit the light at least over a visible light wavelength.

19. A portable electric device comprising:
a display window assembly as defined in any one of claims 1 to 18;
an input unit for transmitting input signals to input display signals into the display; and
a control unit for controlling the input signals of the input unit and the display signals of the display.

20. A portable electronic device according to Claim 19 wherein the portable electronic device is a mobile phone.
